# EUROPEAN PATENT SPECIFICATION

(11) **EP 3 900 867 B1**
(45) Date of publication and mention of the grant of the patent: **19.08.2026**
(21) Application number: 19900978.8
(22) Date of filing: 13.12.2019
(51) Int. Cl.: B23K 20/00, B23K 20/02, B23K 20/233, B23K 101/14, B23K 103/10

(54) **JOINING METHOD AND JOINT BODY**
VERBINDUNGSVERFAHREN UND GEFÜGTER KÖRPER
PROCÉDÉ DE JONCTION ET CORPS JOINT

(30) Priority: 21.12.2018 JP 2018240266
(43) Date of publication of application: 27.10.2021
(73) Proprietor: NHK Spring Co., Ltd., Yokohama-shi, Kanagawa 236-0004 (JP)
(72) Inventor: HANAMACHI, Toshihiko, Yokohama-shi, Kanagawa 236-0004 (JP); FUJINO, Daisuke, Yokohama-shi, Kanagawa 236-0004 (JP); TAKIMOTO, Masaru, Yokohama-shi, Kanagawa 236-0004 (JP); ARAKI, Yoshihito, Yokohama-shi, Kanagawa 236-0004 (JP); FUJII, Masahiro, Yokohama-shi, Kanagawa 236-0004 (JP)
(74) Representative: Hoffmann Eitle
(86) International application number: PCT/JP2019/049049
(87) International publication number: WO 2020/129863

(56) References cited:
- CN-A- 104 084 691
- JP-A- 2004 216 242
- JP-A- 2006 159 223
- JP-A- 2009 535 801
- JP-A- 2010 094 683
- JP-A- 2014 091 125
- JP-B2- 4 838 992
- ASTM: "Standard Practice for Measuring Flatness Characteristics of Steel Sheet Products", A1030 / A1030M, 1 May 2021 (2021-05-01), West Conshohocken, PA, pages 1 - 9, XP093121634, Retrieved from the Internet <URL:https://www.astm.org/a1030_a1030m-16.html> [retrieved on 20240119], DOI: 10.1520/A1030_A1030M-21

## Description

### Field

The present invention relates to a joining method of joining members by diffusion bonding and a joined body. Background

As components used in a semiconductor manufacturing apparatus, an electrode portion, a cooling plate, a heater, a shower head, and the like have a plate with passages. The plate with passages is made of a metal or ceramic composite, and a main body formed with passages through which a medium for heating or cooling or a process gas moves is covered with a cover (for example, see Patent Literature 1). In Patent Literature 1, the cover and the main body are overlapped, and then the main body and the cover are joined by brazing.

### Citation List

### Patent Literature

Patent Literature 1: JP 2009-535801 A

### Summary

### Technical Problem

However, in the joining method of Patent Literature 1, there is a concern of quality deterioration that brazing material flows into the passages during brazing so that the surface of the passages becomes rough, a flow rate varies in the portion where the brazing material stays so that a temperature changes due to the variation in the flow rate, or impurity contamination occurs due to brazing material components.

The present invention has been made in view of the above-described circumstance and an object thereof is to provide a joining method and a joined body capable of suppressing quality deterioration due to joining while reliably joining a main body and a cover.
JP 4-838992 B2 discloses a diffusion bonding method for aluminium alloy. JP 2010-094683 A and CN 104 084 691 A are further prior art.

### Solution to Problem

The invention is defined by the independent claims.

Moreover, in the joining method according to the present invention, each of a joining surface of the main body and a joining surface of the cover can have a surface roughness greater than zero and equal to or less than Ra 0.4.

Moreover, in the joined body according to the present invention, the main body and the cover can have a tensile strength of 125 MPa or greater.

### Advantageous Effects of Invention

According to the present invention, an effect is obtained in which quality deterioration due to joining can be suppressed while a main body and a cover are reliably joined.

### Brief Description of Drawings

FIG. 1 is a partial cross-sectional view illustrating a structure of a plate with passages according to an embodiment of the present invention.
FIG. 2 is an enlarged cross-sectional view of a region R illustrated in FIG. 1.
FIG. 3 is a cross-sectional view illustrating a method of manufacturing the plate with passages according to the embodiment of the present invention.
FIG. 4 is a cross-sectional view illustrating the method of manufacturing the plate with passages according to the embodiment of the present invention.
FIG. 5 is a view illustrating a configuration of a test piece used in an example of the present invention.
FIG. 6A is a view illustrating an SEM image of an interface after joining in the example of the present invention.
FIG. 6B is a view illustrating the SEM image of the interface after joining in the example of the present invention.
FIG. 6C is a view illustrating the SEM image of the interface after joining in the example of the present invention.
FIG. 7A is a view illustrating an EDX observation image of the interface after joining in the example of the present invention.
FIG. 7B is a view illustrating the EDX observation image of the interface after joining in the example of the present invention.
FIG. 7C is a view illustrating the EDX observation image of the interface after joining in the example of the present invention.
FIG. 7D is a view illustrating the EDX observation image of the interface after joining in the example of the present invention.
FIG. 8 is a diagram illustrating a tensile test result of test pieces obtained by diffusion bonding with a joining surface pressure of 0.7 MPa.
FIG. 9 is a view illustrating the tensile test result of the test pieces obtained by diffusion bonding with the joining surface pressure of 0.7 MPa.
FIG. 10 is a diagram illustrating a tensile test result of test pieces obtained by diffusion bonding with a joining surface pressure of 0.5 MPa.
FIG. 11 is a view illustrating the tensile test result of the test pieces obtained by diffusion bonding with the joining surface pressure of 0.5 MPa.
FIG. 12 is a view illustrating a result of an ultrasonic flaw detection test of a plate with passages according to the example.
FIG. 13 is a view illustrating particle measurement.

### Description of Embodiments

Hereinafter, an embodiment for carrying out the present invention will be described in detail together with drawings. Incidentally, the present invention is not limited to the following embodiment. Further, each of the drawings referred to in the following description merely schematically illustrates the shape, size, and positional relationship to the extent that the content of the present invention can be understood. That is, the present invention is not limited to the shape, size, and positional relationship exemplified in each drawing.

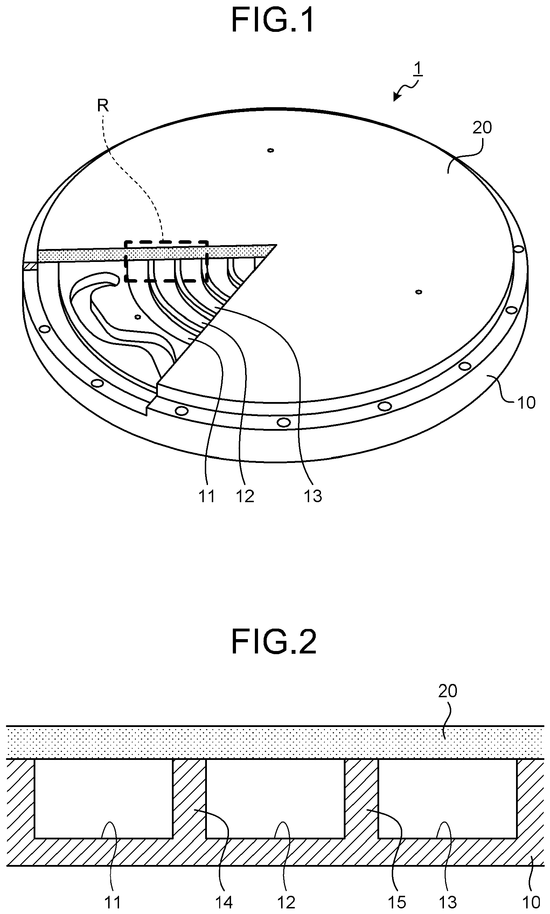

FIG. 1 is a partial cross-sectional view illustrating a structure of a plate with passages according to the embodiment of the present invention. FIG. 2 is an enlarged cross-sectional view of a region R illustrated in FIG. 1. A plate 1 with passages illustrated in FIG. 1 includes a disc-shaped main body 10 and a cover 20 which covers one surface (here, an upper surface) of the main body 10. The plate 1 with passages is a joined body in which the main body 10 and the cover 20 are joined by diffusion bonding. The plate 1 with passages is attached to, for example, a semiconductor device and functions as a cooling device in the semiconductor device. In addition, the plate 1 with passages may be used as a heater for heating the device to be attached, may be used as a heater plate for circulating a gas through a passage to be described later, or may be used as a shower head for injecting a process gas in a thin film forming device.

The main body 10 has a disc shape made of aluminum alloy No. 6061 (A6061). The main body 10 is formed with passages (for example, passages 11 to 13 illustrated in FIG. 1) through which a medium for promoting heat exchange is circulated. In the main body 10, the surface on the opening side of the passages is joined to the cover 20 by diffusion bonding. The passages 11 to 13 are separated by a wall portion 14 or a wall portion 15. The passages 11 to 13 may communicate with each other to form one passage, or at least a part thereof may form an independent passage. Further, the medium is a liquid such as water or a gas.

The cover 20 has a disc shape made of aluminum alloy No. 6061. The cover 20 covers the passage forming surface of the main body 10.

The main body 10 and the cover 20 are joined by diffusion bonding to be described later.

In the plate 1 with passages, a medium is introduced from a medium inflow port (not illustrated) to be circulated in the passages, and the medium is discharged from a medium discharge port (not illustrated). In the plate 1 with passages, the heat transferred from a heat source is released to the outside through the main body 10 and the cover 20, or the medium absorbing the heat transferred from the heat source is discharged from the passages.

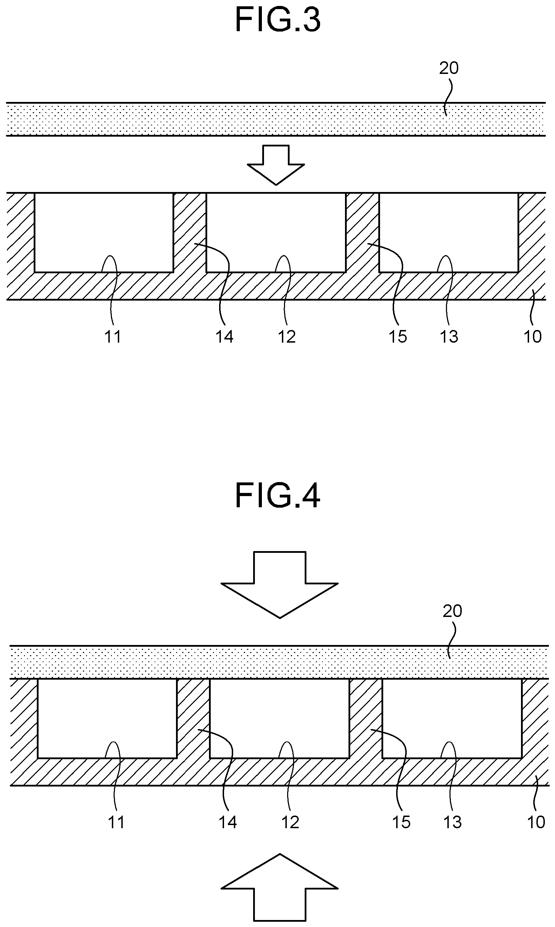

Next, a method of manufacturing the plate 1 with passages will be described. FIGS. 3 and 4 are cross-sectional views illustrating the method of manufacturing the plate with passages according to the embodiment of the present invention.

First, the main body 10 in which the above-described passages (for example, the passages 11 to 13) and the cover 20 are formed are prepared (see FIG. 3). Then, the cover 20 is put on the main body 10 (covering step). At this time, the opening of the passages of the main body 10 is covered with the cover 20. The plate 1 with passages has, for example, a disc shape having a diameter of 150 mm or more.

Subsequently, the main body 10 and a cover base material 200 are joined by diffusion bonding (see FIG. 4: diffusion bonding step). In the diffusion bonding, members which are in close contact with each other are pressurized to each other under temperature conditions below the melting point of the members, and the diffusion of atoms generated between the joining surfaces is utilized to join the members. At this time, a load to the extent that plastic deformation does not occur as much as possible is applied to the members which are in close contact with each other.

The conditions for diffusing and joining members made of aluminum or aluminum alloy are that a joining temperature is 500°C or higher and 640°C or lower, and a joining surface pressure is 0.7 MPa or higher.

The joining temperature varies depending on the type of aluminum alloy. For example, the temperature is set lower than the melting point of the member.

The joining surface pressure is preferably 3 MPa or lower although the joining surface pressure depends on the type of the member.

Further, as the accuracy of the joining surface of each member, a flatness is preferably 0.2 or less. Further, the surface roughness of the joining surface is preferably greater than zero and equal to or less than Ra 0.4, and more preferably equal to or less than Ra 0.1.

In the above-described embodiment, the main body 10 and the cover 20 are joined by diffusion bonding. By diffusion bonding, quality deterioration due to joining can be suppressed while the main body and the cover are reliably joined. In this embodiment, a conventional quality deterioration can be suppressed in which brazing material flows into the passages during brazing so that the surface of the passages becomes rough, a flow rate varies in the portion where the brazing material stays so that a temperature changes due to the variation in the flow rate, or impurity contamination occurs due to brazing material components. Thus, members can be joined reliably to each other.

As described above, the present invention may include various embodiments not described here, and various design changes and the like may be made without departing from the technical idea specified by the claims.

### [Example]

Hereinafter, an example of the joining method and the joined body according to the present invention will be described. Incidentally, the present invention is not limited to this example.

### (Evaluation of joining surface of test piece)

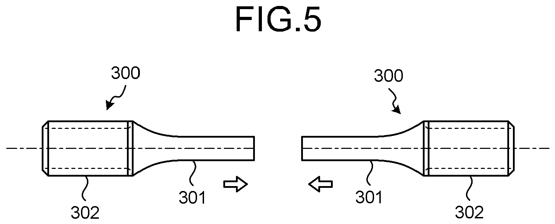

As the test piece to be tested as a joined body, a result obtained by joining two members having the same shape together was used. FIG. 5 is a view illustrating the configuration of the test piece used in the example of the present invention. As this test piece, a diffusion-joined member 300 was used. The member 300 is made of aluminum alloy No. 6061 (A6061). The member 300 has a substantially columnar joining portion 301 having a joining surface, and a grip portion 302 connected to the side opposite to the joining surface side of the joining portion 301 and gripped at the time of the test. In the grip portion 302, a thread is formed on the side surface thereof.

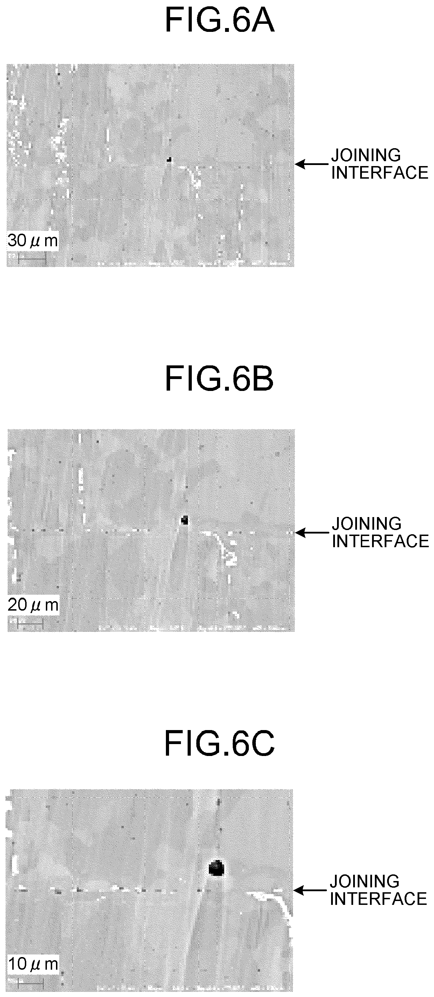

In this example, six test pieces obtained by diffusion bonding at a joining temperature of 550°C and a joining surface pressure of 0.7 MPa and six test pieces joined at a joining surface pressure of 0.5 MPa were manufactured by using the above-described member 300. FIGS. 6A to 6C are views illustrating the SEM image of the interface after joining in the example of the present invention. FIG. 6B is an enlarged view of the central portion of FIG. 6A. FIG. 6C is an enlarged view of the central portion of FIG. 6B. As illustrated in FIGS. 6A to 6C, it can be seen that joining is made at a joining interface without defects.

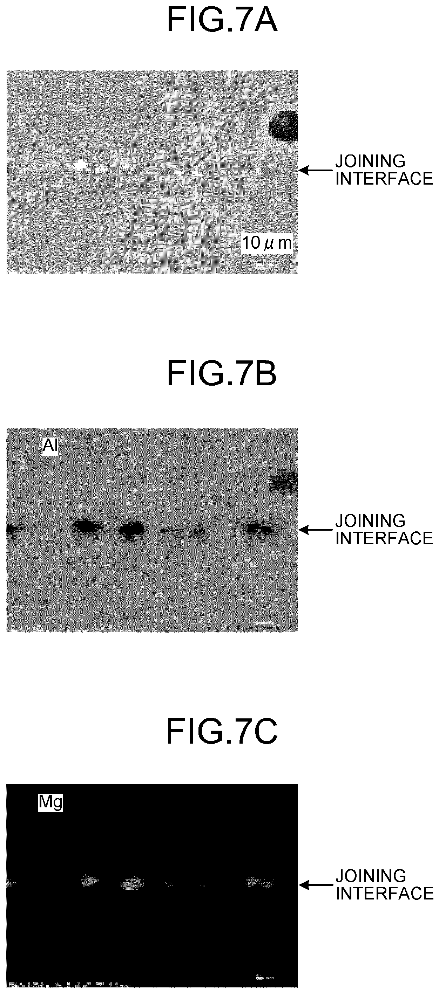

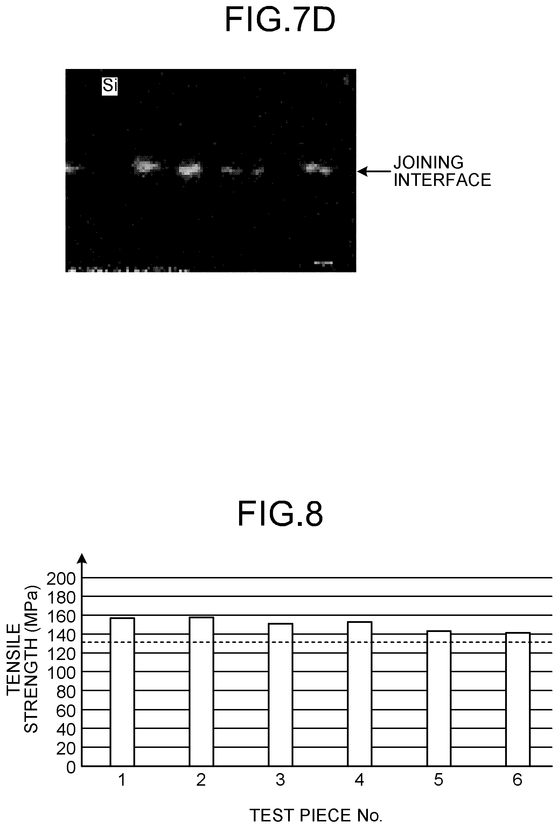

FIGS. 7A to 7D are views illustrating the EDX observation image of the interface after joining in the example of the present invention. FIG. 7A illustrates a reflection image at the interface after joining. FIG. 7B illustrates a distribution image of aluminum (Al) at the interface after joining. FIG. 7C illustrates a distribution image of magnesium (Mg) at the interface after joining. FIG. 7D illustrates a distribution image of silicon (Si) at the interface after joining. In FIGS. 7B to 7D, the lighter the color, the more the component is contained.

As illustrated in FIG. 7B, it can be seen that aluminum which is the main component of the member 300 is widely distributed.

Further, as illustrated in FIGS. 7C and 7D, it can be seen that magnesium and silicon are precipitated at the joining interface. Herein, magnesium and silicon reduce the oxide film of aluminum to form an oxide. It is considered that this reaction changes an amorphous oxide film at the joining interface into crystalline oxide particles, which contributes to the joining between the members 300.

### (Tensile test of test piece)

A tensile test was carried out on these test pieces. The test pieces obtained by joining with a joining surface pressure of 0.7 MPa were numbered No. 1 to No. 6, the test pieces obtained by joining with a joining surface pressure of 0.5 MPa were numbered No. 11 to No. 16, and the test was performed. The tensile test result is illustrated in FIGS. 8 to 11.

FIG. 8 is a diagram illustrating the tensile test result of the test pieces obtained by diffusion bonding with a joining surface pressure of 0.7 MPa. The tensile strength of each of the test pieces No. 1 to No. 6 exceeds 125 MPa. Herein, the tensile strength of aluminum alloy No. 6061 (A6061) is 125 MPa. From this, it can be seen that, in the test pieces No. 1 to No. 6, all the test pieces have a tensile strength larger than the tensile strength of aluminum alloy No. 6061 (A6061) which is the main component of the member 300.

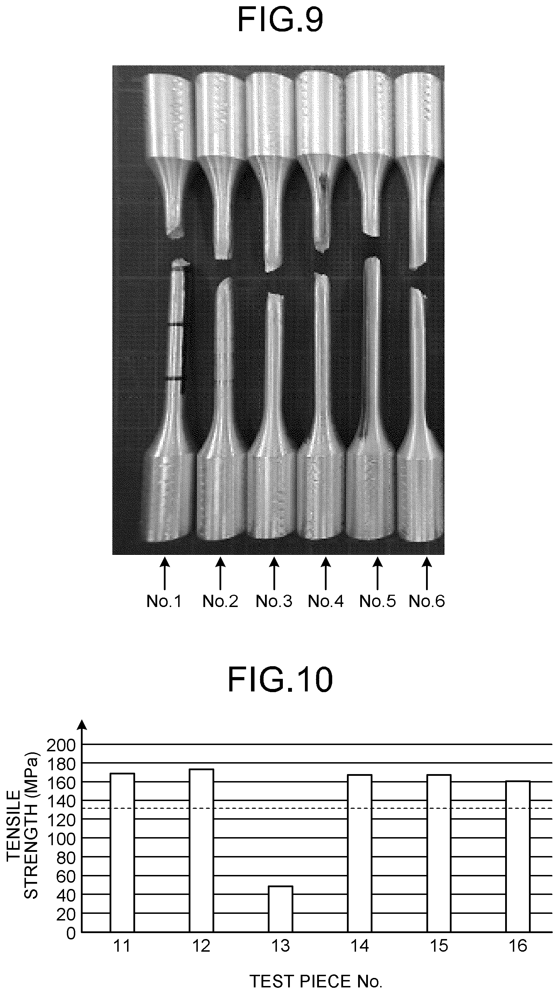

FIG. 9 is a view illustrating the tensile test result of the test pieces obtained by diffusion bonding with a joining surface pressure of 0.7 MPa. It can be seen that in any of the test pieces No. 1 to No. 6, a fracture occurs not at the joining interface but at one of the members.

FIG. 10 is a diagram illustrating the tensile test result of the test pieces obtained by diffusion bonding with a joining surface pressure of 0.5 MPa. In the test pieces No. 11 to No. 16, the tensile strength of the test piece No. 13 is less than 125 MPa. Thus, in the test pieces No. 11 to No. 16, some pieces may have a tensile strength smaller than the tensile strength of aluminum alloy No. 6061 (A6061) which is the main component of the member 300.

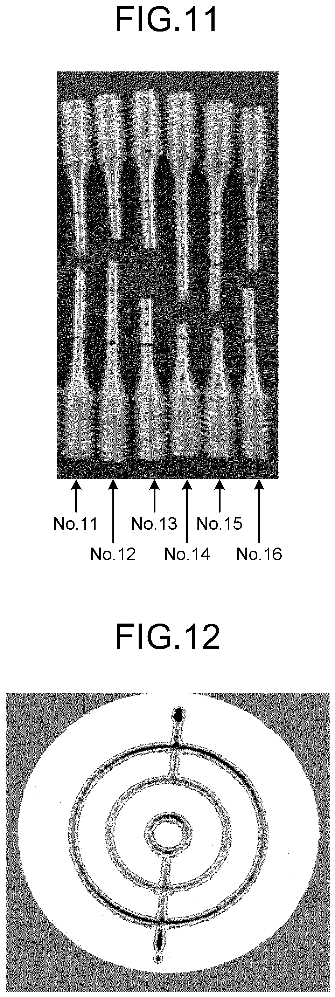

FIG. 11 is a view illustrating the tensile test result of the test pieces obtained by diffusion bonding with a joining surface pressure of 0.5 MPa. It can be seen that in some (test pieces No. 13 and No. 16) of the test pieces No. 11 to No. 16, a fracture occurs at the joining interface.

### (Ultrasonic flaw detection test of plate with passages)

FIG. 12 is a view illustrating a result of an ultrasonic flaw detection test of a plate with passages according to the example. FIG. 12 illustrates a plate with passages obtained by joining with a joining surface pressure of 0.7 MPa. As can be seen from FIG. 12, it can be seen that there are no defects such as damage in the passages formed in the member of the disc.

### (Particle measurement on plate with passages)

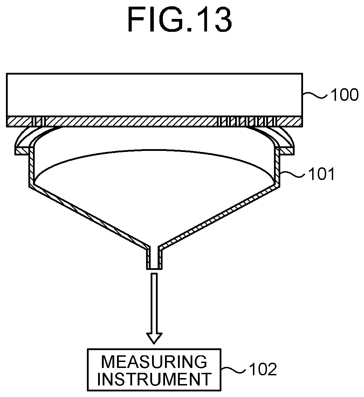

The above-described plate 1 with passages was manufactured, and particle measurement was performed using the plate 1 with passages as a test piece. As a comparison target, the test piece obtained by brazing joining was manufactured, and the particle measurement was performed. FIG. 13 is a view illustrating the particle measurement. In this example, each test piece (test piece 100) was attached to a jig 101, and the particles collected through the jig 101 were measured by a measuring instrument 102. The particle measurement was performed three times for each test piece.

Since the initial particles were large in volume, in the first measurement, nitrogen was flowed through the passages several times for several minutes to stabilize the particles, and then the particles were measured. In the particle measurement, isopropyl alcohol (IPA) was first introduced into the passages and blown with nitrogen for 45 seconds. Then, nitrogen was introduced for one minute, and the number (integrated number) of particles according to the particle size was counted. In this example, the number of particles having a particle size of 0.3 µm or less and the number of particles having a particle size greater than 0.3 µm and equal to or less than 0.5 µm were counted.

The result of the particle measurement using the test pieces obtained by joining with diffusion bonding are as follows.
Particle size
0.5 µm or less 0.3 µm or less

| | | |
|---|---|---|
| First | 88 | 15 |
| Second | 39 | 13 |
| Third | 15 | 2 |

On the other hand, the results of particle measurement using the test piece obtained by joining with brazing are as follows.
Particle size
0.3 µm or less 0.5 µm or less

| | | |
|---|---|---|
| First | 483 | 168 |
| Second | 238 | 84 |
| Third | 189 | 87 |

Incidentally, in the particle measurement using only the jig, the count number was zero for all sizes.

From the above-described measurement result, it can be seen that the passage of the plate with passages obtained by joining with diffusion bonding has less particles than the passage of the plate with passages obtained by joining with brazing.

### Industrial Applicability

As described above, the joining method and the joined body according to the present invention are suitable for suppressing the quality deterioration due to joining while reliably joining the main body and the cover. Reference Signs List

- 1: PLATE WITH PASSAGES
- 10: MAIN BODY
- 11 to 13: PASSAGE
- 14, 15: WALL PORTION
- 20: COVER

## Claims

1. A joining method of joining a main body (10) and a cover (20), the main body (10) being made of aluminum alloy No. 6061 and including a passage (11-13) through which a medium for promoting heat exchange is circulated in use, and the cover (20) being made of aluminum alloy No. 6061 and configured to cover the passage (11-13) of the main body (10), the method comprising:
a covering step of covering the main body (10) with the cover (20); and
a diffusion bonding step of joining the main body (10) and the cover (20) by diffusion bonding under a condition in which a joining temperature is 500°C or higher and 640°C or lower, and a joining surface pressure is 0.7 MPa or higher,
wherein the tensile strength at the joining interface of the main body (10) and of the cover (20) after the diffusion bonding is larger than a tensile strength of aluminum alloy No. 6061.

2. The joining method according to claim 1, wherein each of a joining surface of the main body (10) and a joining surface of the cover (20) has a surface roughness greater than zero and equal to or less than Ra 0.4.

3. A joined body (1) comprising:
a main body (10) made of aluminum alloy No. 6061 and including a passage (11-13) through which a medium for promoting heat exchange can circulate, and
a cover (20) made of aluminum alloy No. 6061 and configured to cover the passage (11-13) of the main body (10), wherein
the main body (10) and the cover (20) are diffusion-joined and
the tensile strength at the joining interface of the main body (10) and of the cover (20) after the diffusion bonding is larger than a tensile strength of aluminum alloy No. 6061 .

4. The joined body according to claim 3, wherein the main body (10) and the cover (20) have a tensile strength of 125 MPa or greater.

## Patentansprüche

1. Verbindungsverfahren zum Verbinden eines Hauptkörpers (10) und einer Abdeckung (20), wobei der Hauptkörper (10) aus Aluminiumlegierung Nr. 6061 hergestellt ist und einen Durchgang (11-13) einschließt, durch den im Gebrauch ein Medium zum Fördern des Wärmeaustauschs zirkuliert wird, und wobei die Abdeckung (20) aus Aluminiumlegierung Nr. 6061 hergestellt ist und ausgebildet ist, den Durchgang (11-13) des Hauptkörpers (10) abzudecken, wobei das Verfahren Folgendes umfasst:
einen Abdeckschritt des Abdeckens des Hauptkörpers (10) mit der Abdeckung (20); und
einen Diffusionsfügeschritt des Verbindens des Hauptkörpers (10) und der Abdeckung (20) durch Diffusionsfügen unter einer Bedingung, bei der eine Fügetemperatur 500°C oder höher und 640°C oder niedriger ist und ein Fügeflächendruck 0,7 MPa oder höher ist,
wobei die Zugfestigkeit an der Fügegrenzfläche des Hauptkörpers (10) und der Abdeckung (20) nach dem Diffusionsfügen größer ist als eine Zugfestigkeit der Aluminiumlegierung Nr. 6061.

2. Verbindungsverfahren nach Anspruch 1, wobei sowohl eine Fügefläche des Hauptkörpers (10) als auch eine Fügefläche der Abdeckung (20) jeweils eine Oberflächenrauheit größer als null und gleich oder kleiner als Ra 0,4 aufweist.

3. Verbindungskörper (1), umfassend:
einen Hauptkörper (10), der aus Aluminiumlegierung Nr. 6061 hergestellt ist und einen Durchgang (11-13) einschließt, durch den ein Medium zum Fördern des Wärmeaustauschs zirkulieren kann, und
eine Abdeckung (20), die aus Aluminiumlegierung Nr. 6061 hergestellt ist und ausgebildet ist, den Durchgang (11-13) des Hauptkörpers (10) abzudecken, wobei der Hauptkörper (10) und die Abdeckung (20) diffusionsgefügt sind, und
die Zugfestigkeit an der Fügegrenzfläche des Hauptkörpers (10) und der Abdeckung (20) nach dem Diffusionsfügen größer ist als eine Zugfestigkeit der Aluminiumlegierung Nr. 6061.

4. Verbindungskörper nach Anspruch 3, wobei der Hauptkörper (10) und die Abdeckung (20) eine Zugfestigkeit von 125 MPa oder größer aufweisen.

## Revendications

1. Procédé de jonction pour joindre un corps principal (10) et un couvercle (20), le corps principal (10) étant en alliage d'aluminium n° 6061 et incluant un passage (11-13) à travers lequel un fluide favorisant l'échange thermique est mis en circulation lors de l'utilisation, et le couvercle (20) étant en alliage d'aluminium n° 6061 et configuré pour recouvrir le passage (11-13) du corps principal (10), le procédé comprenant :
une étape de recouvrement consistant à recouvrir le corps principal (10) avec le couvercle (20) ; et
une étape d'assemblage par diffusion consistant à joindre le corps principal (10) et le couvercle (20) par assemblage par diffusion sous une condition dans laquelle une température de jonction est de 500 °C ou plus et de 640 °C ou moins, et une pression de surface de jonction est de 0,7 MPa ou plus,
dans lequel la résistance à la traction à l'interface de jonction du corps principal (10) et du couvercle (20) après l'assemblage par diffusion est supérieure à une résistance à la traction de l'alliage d'aluminium n° 6061.

2. Procédé de jonction selon la revendication 1, dans lequel chacune d'une surface de jonction du corps principal (10) et d'une surface de jonction du couvercle (20) présente une rugosité de surface supérieure à zéro et égale à ou inférieure à Ra 0,4.

3. Corps joint (1) comprenant :
un corps principal (10) en alliage d'aluminium n° 6061 et incluant un passage (11-13) à travers lequel un fluide favorisant l'échange thermique peut circuler, et
un couvercle (20) en alliage d'aluminium n° 6061 et configuré pour recouvrir le passage (11-13) du corps principal (10), dans lequel
le corps principal (10) et le couvercle (20) sont assemblés par diffusion et
la résistance à la traction à l'interface de jonction du corps principal (10) et du couvercle (20) après l'assemblage par diffusion est supérieure à une résistance à la traction de l'alliage d'aluminium n° 6061.

4. Corps joint selon la revendication 3, dans lequel le corps principal (10) et le couvercle (20) présentent une résistance à la traction de 125 MPa ou plus.
